# EUROPÄISCHE PATENTSCHRIFT

(11) **EP 0 850 129 B1**
(45) Veröffentlichungstag und Bekanntmachung des Hinweises auf die Patenterteilung: **20.09.2000**
(21) Anmeldenummer: 97930248.6
(22) Anmeldetag: 10.07.1997
(51) Int. Cl.: B29C 45/17

(54) **SPRITZGIESSMASCHINE**
INJECTION MOULDING MACHINE
MACHINE A MOULER PAR INJECTION

(30) Priorität: 12.07.1996 EP 96111233; 16.09.1996 AT 54196 U
(43) Veröffentlichungstag der Anmeldung: 01.07.1998
(73) Patentinhaber: Engel Maschinenbau Gesellschaft m.b.H., A-4311 Schwertberg (AT)
(72) Erfinder: URBANEK, Otto, A-4020 Linz (AT); WIMBAUER, Gerhard, A-4311 Schwertberg (AT)
(74) Vertreter: Torggler, Paul, Dr.
(86) Internationale Anmeldenummer: AT9700160
(87) Internationale Veröffentlichungsnummer: WO9802291

(56) Entgegenhaltungen:
- EP-A- 0 311 133
- EP-A- 0 722 820
- WO-A-95/04643
- WO-A-96/05041
- DE-U- 29 516 398

## Beschreibung

Die Erfindung bezieht sich auf eine Spritzgießmaschine mit einem im wesentlichen C-förmigen Maschinenrahmen, an dessen einem Schenkel eine ortsfeste Formaufspannplatte und an dessen anderem Schenkel ein Schließmechanismus zum Antrieb einer bewegbaren Formaufspannplatte gelagert sind, wobei sich die nicht durch Holme verbundenen freien Enden der Schenkel des Maschinenrahmens unter dem Einfluß der während des Schließvorganges auftretenden Schließkraft verformen, und wobei zwischen mindestens einer Formaufspannplatte und dem Maschinenrahmen ein einen in Maschinenlängsrichtung verlaufenden Balken umfassender Gelenkteil angeordnet ist, der beim Aufbringen der Schließkraft deformiert wird, wodurch die Formaufspannplatte relativ zum zugehörigen Schenkel des Maschinenrahmens gekippt wird.

Eine Spritzgießmaschine dieser Art ist beispielsweise aus der WO-A-95/04643 bekannt.

Sofern in früheren Jahrzehnten holmlose Spritzgießmaschinen vorgeschlagen worden sind, hat man generell versucht, die unter dem Einfluß der Schließkraft auftretende Verformung des C-förmigen Maschinenrahmens möglichst gering zu halten. Von nennenswerter praktischer Bedeutung sind holmlose Maschinen aber erst geworden, seit man dazu übergegangen ist, eine gewisse Verformung des Maschinenrahmens zuzulassen und durch geeignete Maßnahmen zu kompensieren. Dabei ist es möglich, zwischen jeder der beiden Formaufspannplatten und dem zugehörigen Schenkel des Maschinenrahmens eine Verformung zuzulassen, welche die Aufspreizung der Schenkel des Maschinenrahmens genau kompensiert, so daß die Formtrennebene beim Aufbringen des Schließdrucks ihre vertikale Lage nicht ändert. Dabei kann vorgesehen werden (vgl. die EP 0 722 820 A1), daß sich das obere Ende des Schenkels des Maschinenrahmens gegenläufig zum Schenkel selbst verschwenkt. Eine bessere Lokalisierung der Schwenkachsen erhält man hingegen, wenn man zwischen Formaufspannplatten und Maschinenrahmen gesonderte, verformbare Halteteile einbringt, wie dies die DE 295 16 398 U1 zeigt.

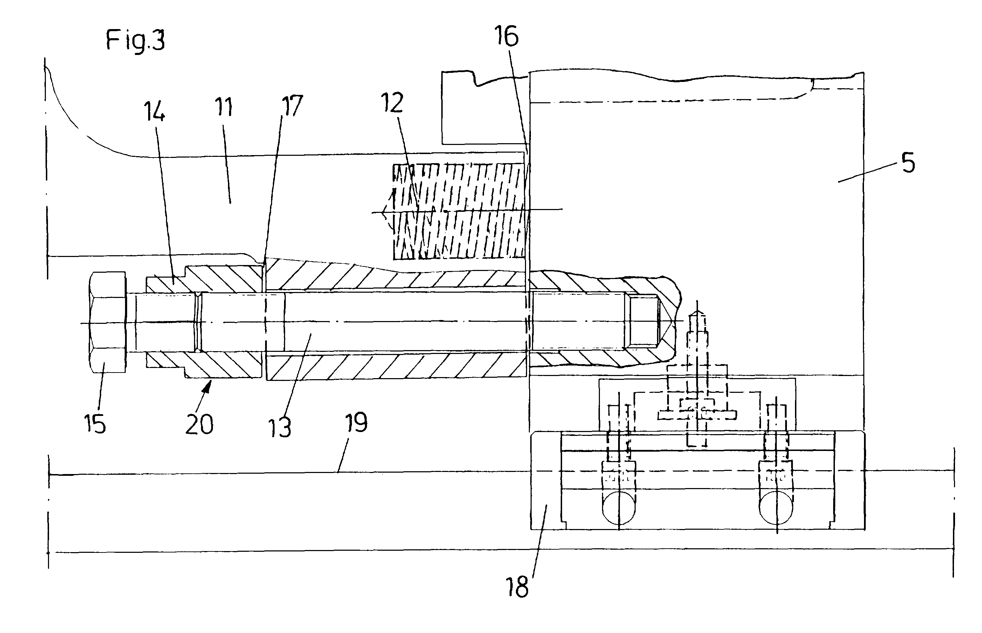

Bei der inzwischen klassisch gewordenen holmlosen Spritzgießmaschine nach der EP 0 311 133 B kommt man dadurch mit einer Schwenkachse aus, daß die ortsfeste Formaufspannplatte mit dem Maschinenrahmen starr verbunden wird, und die bewegbare Formaufspannplatte kippbar gelagert wird, damit sie die Verschwenkung, welche die feststehende Formaufspannplatte unter dem Einfluß der Schließkraft erfährt, mitmachen kann. In Fig. 3 - 6 der AT 400 022 B ist eine entsprechende konstruktive Lösung gezeigt, welche der eingangs gegebenen Definition entspricht.

Die bekannte Konstruktion nach der AT 400 022 B (siehe WO-A-95/04643) legt die Betonung ganz auf das Verschwenken der bewegbaren Formaufspannplatte unter dem Einfluß der Schließkraft. Über einen großen Teil des Querschnitts durchgehende Ausnehmungen erlauben in diesem Sinn die Kompression des unteren Teils des Balkens.

Die Erfindung geht demgegenüber von der Überlegung aus, daß bei den zum Spritzgießen notwendigen Schließdrücken nicht die Biegung des Balkens, sondern die Aufnahme der Schließkraft das eigentliche Problem darstellt.

Es besteht daher die Aufgabe, die Schließkraft aufzunehmen, ohne daß das Material des Gelenkteiles plastisch verformt wird, während dieser durch das zwischen den beiden Formhälften auftretende Moment hinreichend gebogen wird, um die Öffnung der Rahmenschenkel zu kompensieren.

Dies wird gemäß der Erfindung dadurch erreicht, daß der Querschnitt des Gelenkteils sich ausgehend vom zentralen Balken gleichsinnig vergrößert. Durch diese Maßnahme wird die Schwenkachse der beweglichen Formaufspannplatte im Mittelbereich des Gelenkteiles lokalisiert. Außerdem wird der Anschluß an die benachbarten Maschinenteile sichergestellt, welche durch die breitere Auflagefläche von geringerer Qualität sein können als der Gelenkteil selbst.

Zweckmäßige Weiterbildungen der Erfindung sind in den abhängigen Ansprüchen beschrieben.

Die flanschartige Ausbildung der Enden des erfindungsgemäßen Gelenkteils ermöglicht es, an einen der Flansche einstückig einen Anschlag anzuformen, der in einer und vorzugsweise in beiden Richtungen die Verschwenkung der beweglichen Formaufspannplatte begrenzt.

Ein Ausführungsbeispiel der Erfindung wird anschließend anhand der Zeichnung erläutert. In dieser ist

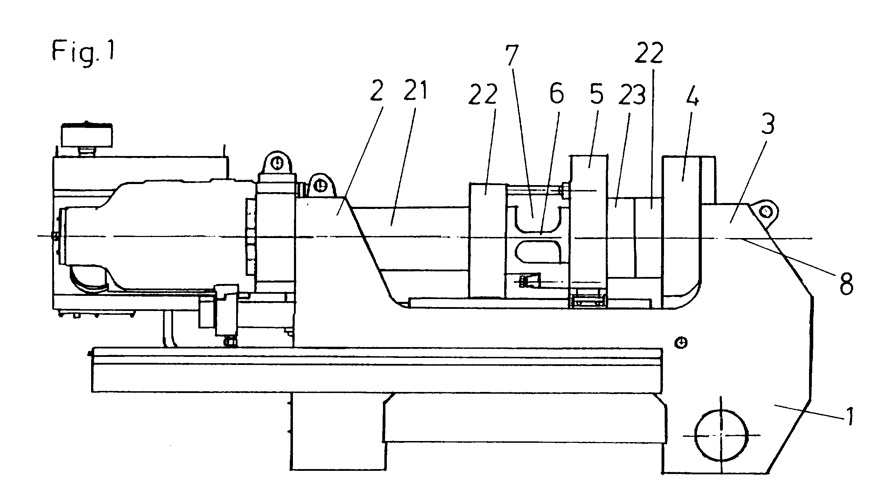

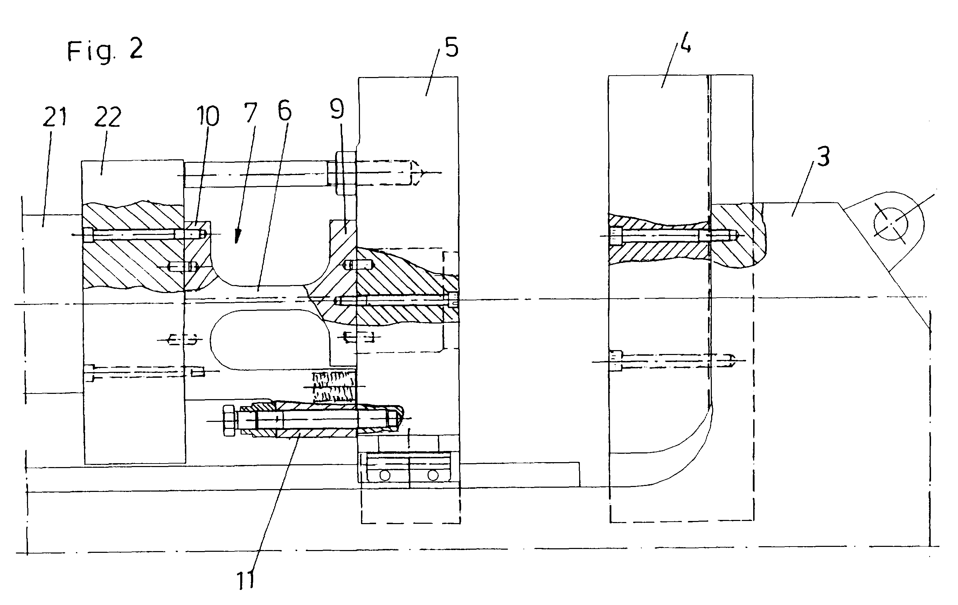

Fig. 1 eine schematische Darstellung einer erfindungsgemäßen Spritzgießmaschine in Seitenansicht, Fig. 2 ein vergrößertes Detail von Fig. 1, und Fig. 3 ein vergrößertes Detail von Fig. 2.

Die in Fig. 1 dargestellte Spritzgießmaschine weist einen Maschinenrahmen 1 auf, dessen Besonderheit darin liegt, daß die nach oben ragenden Schenkel 2 und 3 des Maschinenrahmens 1 nicht durch Holme verbunden sind. Die Einspritzung von Kunststoff in die zwischen der ortsfesten Formaufspannplatte 4 und der bewegbaren Formaufspannplatte 5 anzuordnende Form erfolgt mittels einer nicht dargestellten Einspritzeinheit, während die Formaufspannplatten 4, 5 durch eine beispielsweise hydraulische Schließeinrichtung zusammengepreßt werden. Dabei kommt es zu einer leichten Aufweitung des C-förmigen Maschinenrahmens. Beim dargestellten Ausführungsbeispiel wird davon ausgegangen, daß die Formaufspannplatte 4 die Bewegung des Schenkels 3 mitmacht, und ein einziger Gelenkteil 7 eine Verschwenkung der Formaufspannplatte 5 erlaubt, so daß die Formaufspannplatten 4 und 5 auch unter dem Einfluß des Schließdruckes parallel bleiben. Der Gelenkteil 7, der in Fig. 2 im einzelnen dargestellt ist, besteht aus einem längsgerichteten Balken 6, dessen Querschnitt ein liegendes Rechteck bildet. Dieser Balken 6 erweitert sich in beiden Richtungen gleichsinnig zu Flanschen 9 und 10, welche mit den angrenzenden Platten 5 und 22 verbunden sind. Die Mittelachse 8, welche durch die auf den Formaufspannplatten 4, 5 vorgesehenen Zentriereinrichtungen für die Formhälften 22, 23 definiert ist, verläuft zur Gänze im Inneren des Balkens 6, vorzugsweise geringfügig in dessen untere Hälfte verschoben.

Wird mittels der Schließeinrichtung 21 Schließdruck auf die geschlossene Form ausgeübt, so wird dieser durch den Balken 6 geleitet, welcher sich nach oben wölbt, sobald sich die Formaufspannplatten 4 und 5 gemeinsam im Uhrzeigersinn neigen. Diese Neigung wird durch einen mit dem Flansch 10 einstückigen Anschlagteil 11 begrenzt, welcher sich (vgl. Fig. 3) über eine Tellerfeder 12 an der Formaufspannplatte 5 abstützt. Die Verschwenkung der Formaufspannplatte 5 relativ zur Schiene 19, auf welcher die Formaufspannplatte 5 mittels eines Gleitschuhs verfahrbar ist, wird dabei durch eine federnde Verbindung zwischen Gleitschuh 18 und Formaufspannplatte 5 ermöglicht. Bei Überlastung wird die Verschwenkung der Formaufspannplatte 5 im Uhrzeigersinn beendet, wenn der Spalt 16 völlig geschlossen ist.

Eine Bewegung der Formaufspannplatte 5 entgegen dem Uhrzeigersinn, wie sie insbesondere bei zu hoch angeordneter Form möglich ist, begrenzt ein den Anschlagteil 11 hintergreifendes Gegenstück 20, welches am Anschlagteil 11 zur Anlage kommt, wenn der Spalt 17 geschlossen ist. Diese Situation besteht im unbelasteten Zustand. Das Gegenstück 20 besteht aus einem in der Formaufspannplatte 5 festsitzenden Gewindestift 13, welcher eine durch eine Schraubensicherung 15 fixierte Anschlagmutter 14 trägt.

## Patentansprüche

1. Spritzgießmaschine mit einem im wesentlichen C-förmigen Maschinenrahmen (1), an dessen einem Schenkel (3) eine ortsfeste Formaufspannplatte (4) und an dessen anderem Schenkel (2) ein Schließmechanismus (21) zum Antrieb einer bewegbaren Formaufspannplatte (5) gelagert sind, wobei sich die nicht durch Holme verbundenen freien Enden der Schenkel (2, 3) des Maschinenrahmens (1) unter dem Einfluß der während des Schließvorganges auftretenden Schließkraft verformen, und wobei zwischen mindestens einer Formaufspannplatte (4, 5) und dem Maschinenrahmen (1) ein einen in Maschinenlängsrichtung verlaufenden Balken (6) umfassender Gelenkteil (7) angeordnet ist, der beim Aufbringen der Schließkraft deformiert wird, wodurch die Formaufspannplatte (4; 5) relativ zum zugehörigen Schenkel (3; 2) des Maschinenrahmens (1) gekippt wird, dadurch gekennzeichnet, daß der Querschnitt des Gelenkteils (7) sich ausgehend vom zentralen Balken (6) gleichsinnig vergrößert.

2. Spritzgießmaschine nach Anspruch 1, dadurch gekennzeichnet, daß um einen der den Balken (6) des Gelenkteiles (7) begrenzenden Flansche (9,10) ein bis nahe an die bewegbare Formaufspannplatte (5) heranreichender Anschlagteil (11) anschließt.

3. Spritzgießmaschine nach Anspruch 2, dadurch gekennzeichnet, daß sich der Anschlagteil (11) über eine Feder (12) an der Formaufspannplatte (5) abstützt.

4. Spritzgießmaschine nach Anspruch 2, dadurch gekennzeichnet, daß der Anschlagteil (11) mit einem in der Formaufspannplatte (5) verankerten, den Anschlagteil (11) hintergreifenden Gegenstück (20) zusammenwirkt.

## Claims

1. An injection molding machine comprising a substantially C-shaped machine frame, on one limb (3) of which is mounted a stationary mold mounting plate (4) and on the other limb (2) of which is mounted a closing mechanism (21) for driving a movable mold mounting plate (5), wherein the free ends of the limbs (2, 3) of the machine frame (1), which are not connected by frame beams, deform under the influence of the closing force which occurs during the closing operation, and wherein arranged between at least one mold mounting plate (4, 5) and the machine frame (1) is a hinge portion (7) which includes a bar portion (6) extending in the longitudinal direction of the machine, which hinge portion is deformed when the closing force is applied whereby the mold mounting plate (4, 5) is tilted relative to the associated limb (3, 2) of the machine frame (1), characterised in that the cross-section of the hinge portion (7) increases continuously starting from the central bar portion (6).

2. An injection molding machine as set forth in claim 1 characterised in that an abutment portion (11) which extends to close to the movable mold mounting plate (5) adjoins one of the flanges (9, 10) which defines the bar portion (6) of the hinge portion (7).

3. An injection molding machine as set forth in claim 2 characterised in that the abutment portion (11) bears against the mold mounting plate (5) by way of a spring (12).

4. An injection molding machine as set forth in claim 2 characterised in that the abutment portion (11) co-operates with a counter-portion (20) which is anchored in the mold mounting plate (5) and which engages behind the abutment portion (11).

## Revendications

1. Machine de moulage par injection comportant un bâti de machine (1) essentiellement en forme C, sur une branche (3) duquel est monté un plateau fixe (4) de serrage de moule et sur l'autre branche (2) duquel est monté un mécanisme de fermeture (21) servant à entraîner un plateau mobile (5) de serrage du moule, et dans laquelle les extrémités libres, non reliées par des traverses, des branches (2,3) du bâti de machine (1) se déforment sous l'influence de la force de fermeture qui apparaît pendant le processus de fermeture, et dans laquelle entre au moins un plateau (4,5) de serrage du moule et le bâti de machine (1) est disposée un élément d'articulation (7), qui comprend une barre (6) qui s'étend dans la direction longitudinale de la machine et qui se déforme lors de l'application de la force de fermeture, ce qui a pour effet que le plateau (4;5) de serrage du moule bascule par rapport à la branche associée (3;2) du bâti de machine (1,2), caractérisée en ce que la section transversale de la partie d'articulation (7) augmente dans le même sens à partir de la barre centrale (6).

2. Machine de moulage par injection selon la revendication 1, caractérisée en ce qu'un élément de butée (11), qui s'étend jusqu'à proximité du plateau mobile de serrage (5) du moule, est disposée de façon contiguë autour de l'une des brides (9,10) qui délimitent la barre (6) de la partie d'articulation (7).

3. Machine de moulage par injection selon la revendication 2, caractérisée en ce que l'élément de butée (11) prend appui par l'intermédiaire d'un ressort (12), sur le plateau (5) de serrage du moule.

4. Machine de moulage par injection selon la revendication 2, caractérisée en ce que l'élément de butée (11) coopère avec un élément antagoniste (20) qui est ancré dans le plateau (5) de serrage du moule et s'engage derrière l'élément de butée (11).
